Europäisches Patentamt

European Patent Office

Office européen des brevets

(11) Numéro de publication: **0 012 883**

**A1**

(12) # DEMANDE DE BREVET EUROPEEN

(21) Numéro de dépôt: **79104879.6**

(22) Date de dépôt: **04.12.79**

(51) Int. Cl.³: **B 41 J 32/02**
**G 11 B 23/12**

(30) Priorité: **22.12.78 US 972596**

(43) Date de publication de la demande:
**09.07.80 Bulletin 80/14**

(84) Etats Contractants Désignés:
**BE CH DE FR GB NL**

(71) Demandeur: **International Business Machines Corporation**

**Armonk, N.Y. 10504(US)**

(72) Inventeur: **Schaefer, John O'Neil**
**3760 Salisbury Drive**
**Lexington, Kentucky 40504(US)**

(74) Mandataire: **Siccardi, Louis**
**COMPAGNIE IBM FRANCE Département de Propriété Industrielle**
**F-06610 La Gaude(FR)**

(54) Cartouche de ruban en vrac à sortie anti-bourrages.

(57) Cartouche de ruban en vrac comportant des moyens permettant l'extraction du ruban sans bourrages. La paroi latérale (78) de la chambre d'emmagasinage de la cartouche présente une fente incurvée (80) au travers de laquelle passe le ruban qui sort de la cartouche. Lors de son passage dans la fente (80) le ruban est incurvé ce qui provoque le repoussement des boucles qui s'approchent de la fente (80) évitant ainsi les risques de bourrage. Cartouche utilisable notamment pour emmagasiner des rubans encreurs pour machines imprimantes.

FIG. 6

EP 0 012 883 A1

1

# CARTOUCHE DE RUBAN EN VRAC A SORTIE ANTI-BOURRAGES

## Description

### Domaine Technique

La présente invention concerne les cartouches pour l'emmagasinage de rubans, tels que par exemple les rubans encreurs pour machines imprimantes et, plus particulièrement elle concerne une cartouche sans bobines dans laquelle le ruban est emmagasiné en vrac, c'est-à-dire, en boucles de longueurs aléatoires.

### Etat de la Technique Antérieure

Dans les cartouches de ruban en vrac, le ruban est introduit par un mécanisme d'alimentation ou d'emmagasinage dans une chambre d'emmagasinage de la cartouche où il forme des boucles disposées sans ordre défini et de longueurs aléatoires. Le ruban est tiré de la chambre d'emmagasinage par le côté opposé à celui de son introduction et renvoyé au mécanisme d'emmagasinage pour former une boucle sans fin.

Cet emmagasinage du ruban sans aucun ordre défini fait que certaines boucles sont comprimées dans la chambre d'emmagasinage tandis que d'autres sont lâches et qu'il est possible que des boucles de ruban adjacentes à la portion de ruban tirée hors de la chambre d'emmagasinage, soient tirées au travers du passage de sortie. Dans ce cas, plusieurs choses peuvent se produire. Si la boucle est entièrement tirée dans une deuxième chambre, puis entraînée vers le point d'impression, rien de désastreux ne se produit. Cependant, si une ou

2

plusieurs boucles saisies au passage de sortie, est ou sont d'un volume suffisant pour ne pouvoir être entièrement entraînée(s) dans une deuxième chambre, ce bourrage rend la cartouche inutilisable et nécessite son remplacement ou son démontage. Le démontage de la cartouche peut entraîner le dévidage d'une longueur importante de ruban, hors de la cartouche, ce qui rend alors cette dernière inutilisable.

La friction entre des portions de ruban adjacentes, lorsque celui-ci est contenu dans une chambre d'emmagasinage de dimensions réduites, est suffisamment élevée pour qu'il soit impossible de poursuivre l'alimentation dudit ruban à partir de la chambre d'emmagasinage principale tant que la boucle prisonnière ne s'est pas écoulée.

Les pannes provoquées par le bourrage de boucles de ruban dans le passage de sortie sont tout à fait imprévisibles et peuvent se produire aussi bien avec des rubans neufs qu'avec des rubans usagés.

Afin d'éviter les inconvénients indiqués ci-dessus, de nombreux efforts ont été faits, dans la technique antérieure, pour empêcher l'entraînement de boucles multiples dans le passage de sortie ou, si ce cas se produit, pour permettre à ces boucles d'être tirées dans une chambre secondaire d'où le ruban peut être entraîné vers son point d'utilisation après que le bourrage ait été éliminé par le passage de toute la partie bourrée du ruban dans la chambre secondaire. Un exemple de ce type de cartouche est présenté dans le brevet des E.U.A. No. 4 053 042. Selon ce brevet, le ruban est tiré entre un élément flexible et un élément formant une partie de la paroi de la chambre d'emmaga-

3

sinage. Une autre solution possible consiste à entraîner le ruban au travers d'une série d'éléments de
freinage souples pour supprimer toutes les boucles
serrées de celui-ci et ne permettre la sortie que d'une
seule épaisseur de ruban à la fois. Un exemple d'un tel
dispositif est présenté dans le brevet des E.U.A. No.
3 863 749. Ces deux techniques ne résolvent pas le
problème du bourrage dans le cas où une boucle ou une
longueur suffisamment importante de ruban est engagée
dans le passage de sortie.

Une autre solution possible à ce problème peut être
trouvée dans le brevet des E.U.A. No. 3 989 132 qui
décrit un dispositif dans lequel des nervures limitent
l'espace occupé par la partie principale du ruban
emmagasiné et laissent un espace libre à l'extrémité de
la cartouche pour recevoir plusieurs boucles de ruban
et permettre l'extension et le déroulement de celui-ci
lorsqu'il est entraîné hors de la chambre d'emmagasinage. Dans ce dispositif particulier, on trouve une
unique zone de pincement qui limite l'espace occupé par
le corps principal du ruban et l'on compte principalement sur la capacité du ruban à se dérouler dans l'espace
libre à l'extrémité de la cartouche, pour le bon fonctionnement du dispositif.

Une autre solution possible aux problèmes de bourrage
est présentée dans la publication intitulée "IBM Technical Disclosure Bulletin", Vol. 20, No.11B, avril 1978,
pages 4739 et 4740 qui décrit une cartouche dont les
parois supérieure et inférieure sont conçues de façon à
former un chemin pour le ruban, présentant un étranglement de hauteur inférieure à la largeur du ruban ce qui
évite le bourrage dudit ruban.

0012883

4

## Exposé de l'Invention

Le dispositif de la présente invention a pour buts de retenir toutes les boucles d'un ruban emmagasiné dans la chambre d'emmagasinage d'une cartouche de ruban en vrac, à l'exception de la partie dudit ruban effectivement retirée de ladite chambre d'emmagasinage, d'éviter le bourrage dudit ruban dans le passage de sortie de ladite cartouche et de séparer la partie du ruban retirée· de la chambre d'emmagasinage des boucles de bande adjacentes.

Selon la présente invention, ces buts sont atteints et les problèmes rencontrés dans les dispositifs de l'art antérieur résolus, au moyen d'un passage ou fente de sortie de la cartouche qui provoque l'incurvation du ruban parallèlement à son axe longitudinal lorsque le ruban quitte la chambre d'emmagasinage. Cette fonction est assurée par des éléments de retenue formés dans les parois de la chambre d'emmagasinage qui, lorsqu'ils sont en correspondance, forment une fente de largeur uniforme au travers de laquelle passe la partie du ruban qui quitte la chambre d'emmagasinage. La fente de largeur uniforme peut également être ménagée dans un même élément. La configuration de la fente est telle que la section du ruban n'est plus rectiligne lorsqu'il la traverse et qu'il est incurvé parallèlement à son axe longitudinal lorsqu'il traverse le passage de sortie. La "gouttière" ainsi formée par le ruban doit être suffisamment profonde pour que les éléments formant la fente interdisent le passage de toute boucle de ruban adjacente à la partie du ruban quittant la chambre d'emmagasinage. La "gouttière" du ruban tend à éloigner de la fente les boucles de ruban adjacentes dans au moins une zone de façon que les éléments formant la fente stoppent les boucles et empêchent leur bourrage à la fente de sortie. Les éléments définissant la fente ont une configuration telle que lorsqu'ils sont en contact l'un avec l'autre, ils forment une ouverture incurvée de largeur uniforme sur toute sa longueur, pouvant être traversée par le ruban. La largeur de la fente est déterminée par le rappel des éléments qui la définissent l'un vers l'autre, ce qui assure une fente de largeur régulière.

### Brève Description des Figures des Dessins

La figure 1 est une vue de dessus de la cartouche de la présente invention, des parties de la paroi supérieure de celle-ci étant retirées.

Les figures 2 et 3 sont des coupes prises selon les lignes 2-2 et 3-3 sur la figure 1 et représentent des éléments différents définissant respectivement une fente de sortie incurvée et une fente en V très ouvert.

La figure 4 est une vue en coupe de la chambre d'emmagasinage et de l'un des éléments définissant la fente, cette vue étant prise selon la ligne 4-4 sur la figure 1.

La figure 5 est une vue en coupe, selon la ligne 5-5 sur la figure 2, d'un élément définissant la fente de sortie de la cartouche dans laquelle passe une certaine longueur de ruban, une boucle de ruban adjacente à la partie du ruban passant par la fente étant également représentée.

La figure 6 représente une autre réalisation possible de la fente dans une paroi monobloc.

6

### Description de Modes de Réalisations
### Préférés

La cartouche de ruban 10 est de forme parallèlépipèdique et présente une fente 12 par laquelle sort le ruban 16 pour être utilisé dans une imprimante. La fente 14 permet de réintroduire le ruban 16 dans la cartouche pour le stocker et le réutiliser. Le ruban 16 peut passer autour d'un galet de guidage 18 qui permet un enroulement suffisant du ruban 16 autour du galet de pincement 20 lequel comporte des dents à sa périphérie pour engréner avec le galet de pincement 22. Le galet de pincement 20 peut être entraîné depuis l'extérieur de la cartouche, d'une manière classique. Le galet 22 est monté sur un support 24 qui le rappelle contre le ruban 16 et le galet 20.

Lorsque le galet de pincement 20 est entraîné en rotation dans le sens anti-horaire, le ruban est introduit dans la cartouche et emmagasiné dans la chambre 26. Le ruban est détaché de la surface du galet 20 par un déflecteur 28 qui forme une partie de la paroi de la chambre d'emmagasinage 26. La cartouche 10 est munie d'une paroi secondaire 30 qui est une partie de la paroi de la chambre d'emmagasinage 26. Cette paroi est complétée par un déflecteur 32 qui est monté en glissant un anneau solidaire dudit déflecteur 32 sur une colonnette 34. Le déflecteur 32 est en contact avec une surface 36 qui peut former une partie ou l'extrémité d'une paroi ou une nervure, pour qu'une zone de pincement soit assurée entre ces deux éléments. Cette zone de pincement freinera le ruban 16 pour que celui-ci soit bien tendu par les galets de pincement 20 et 22.

7

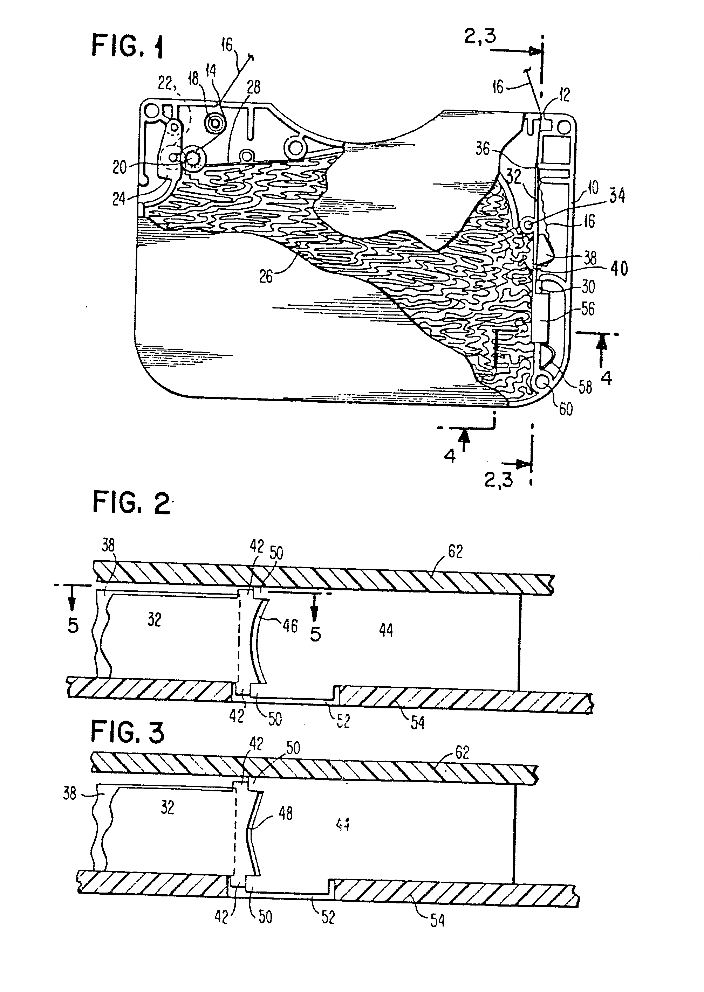

Pour assurer une zone de pincement entre le déflecteur 32 et la surface 36, le déflecteur 32 est élastiquement incurvé par l'appui de son extrémité opposée contre un bloc 38 qui assure une double fonction: d'une part de servir d'appui à l'extrémité du déflecteur 32 et d'autre part, de faire fonction d'élément de guidage autour duquel le ruban peut être retiré de la cartouche. Cette deuxième fonction consiste à assurer le guidage du ruban 16 vers l'extérieur depuis la fente de sortie 40 de façon que la direction des forces appliquées au ruban 16 ne fasse pas un angle trop important par rapport aux bords de la fente de sortie 40. En se reportant aux figures 2 et 3 qui sont des vues en coupe de la cartouche 10 de la figure 1, on distingue mieux la configuration de la fente de sortie 40. Le déflecteur 32 présente des butées supérieure et inférieure 42 qui coopèrent avec un élément 44, définissant la fente, pour éviter une fermeture excessive de la fente de sortie 46 ou 48. L'élément 44, comporte des doigts 50, qui viennent en contact avec les butées 42. La longueur des doigts 50 détermine effectivement la largeur des fentes 46 et 48 et assure l'uniformité de cette largeur. La figure 2 représente une fente 46 de forme incurvée, tandis que la figure 3 représente une fente 48 en forme de V très ouvert. Les deux fentes 46 et 48 déforment transversalement le ruban qui les traverse, c'est-à-dire l'incurvent parallèlement à son axe longitudinal, ce qui fait que la surface de celui-ci n'est plus plane. La butée 42, sur la face inférieure de la cartouche, ainsi que le doigt 50 qui lui est associé, sont disposés dans un évidement 52 ménagé dans la paroi inférieure 54 de la cartouche. Cet agencement de la butée 42 et du doigt 50 accroît la stabilité des éléments 32 et 44 définissant la fente de sortie. L'élément 44 présente en outre un canal 56 en forme de U (voir

8

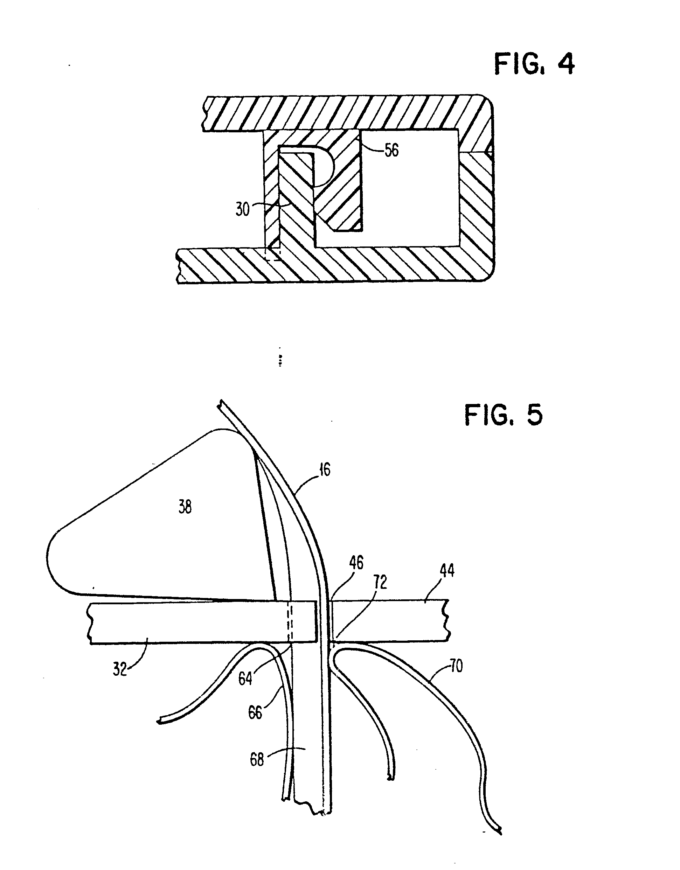

figure 4 plus particulièrement) qui s'emboite sur la partie 30 de la paroi de la chambre d'emmagasinage. Ce montage forme un support latéral rigide tout en permettant le coulissement du canal 56 et de l'élément 44 par rapport à la paroi 30.

Pour assurer le contact des doigts 50 et des butées 42 et ainsi la définition de la fente 46 ou 48 désirée, une lame flexible repliée 58 est calée entre le canal 56 et une partie de la cartouche 10. La figure 1 présente un trou de localisation 60 qui reçoit un têton correspondant solidaire du capot 62 lors du montage de la cartouche. Ce trou de localisation 60 fournit un point d'ancrage approprié à la lame 58. Il va de soi que la lame 58 pourrait tout aussi bien être bloquée différemment. Etant donné que la trajectoire du ruban s'incline après la sortie de la fente 46 ou 48, celles-ci seront de préférence orientées de façon que le ruban soit tiré vers le "fond" de la fente et non pas vers sa "crête". Cet agencement est illustré par les figures 2 et 3 telles qu'en relation avec la figure 1 où la trajectoire du ruban après être passée par la fente 40 (c'est-à-dire 46 ou 48) passe dans la zone de pincement définie par le déflecteur 32 et la surface 36.

La traction exercée sur le ruban 16 par les galets de pincement 20 et 22 provoque son extraction de la chambre d'emmagasinage au travers de la fente de sortie 40. La fente de sortie 40 peut être incurvée (fente 46, figure 2) ou en forme de V très ouvert (fente 48, figure 3). Lorsque le ruban passe au travers de la fente 46 ou 48, sa section droite ne reste pas rectiligne mais prend la forme de la fente traversée.

On verra mieux à la figure 5 l'effet qu'a la déforma-

9

tion transversale du ruban sur la séparation des boucles adjacentes, lorsque celui-ci sort par la fente 46 ou 48 définie par l'élément 44 et le déflecteur 32. La vue en coupe de la figure 5 est prise à ou au voisinage de la surface supérieure du déflecteur 32 et montre la portée de la déformation du ruban 16 au point 64. La boucle de ruban 66 adjacente à la partie déformée 68 du ruban 16 est repoussée dans la chambre tandis que la boucle de ruban 70 est tirée vers la fente de sortie 46 dans laquelle elle ne peut cependant pénétrer car elle ne peut s'aligner avec la fente 46 qu'au point 72 et en aucun autre point de cette fente.

Bien que la plupart des rubans de tissus soient d'une épaisseur relativement uniforme, des variations assy-métriques d'épaisseur peuvent apparaître sur l'axe du ruban. Afin d'éliminer les effets de telles variations, les doigts 50, outre leur fonction de commande de la largeur de la fente en association avec les butées 42, empêchent le ruban d'être tiré vers le haut ou vers le bas hors des fentes 46 et 48.

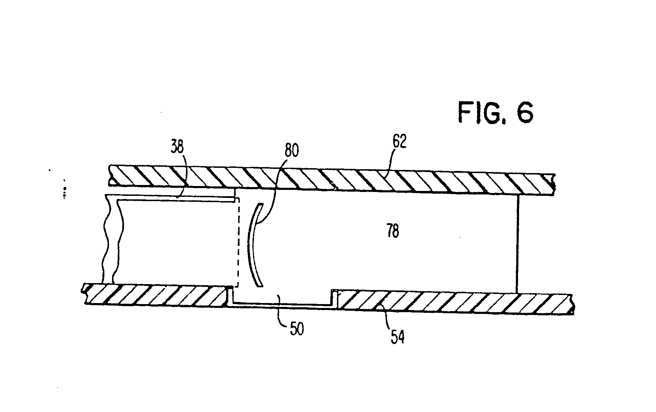

En se reportant à la figure 6, on voit qu'une fente 80 de largeur uniforme a été usinée dans une paroi monobloc 78. Ce type de fente requiert l'engagement du ruban dans la fente avant d'en raccorder les extrémités pour former la boucle sans fin.

Bien que cette description ait été faite plus particulièrement en relation avec un ruban relativement étroit, l'homme de l'art comprendra que la présente invention s'applique à n'importe quelle cartouche de ruban en vrac dans laquelle il est nécessaire de sortir le ruban de la chambre d'emmagasinage pour le transférer

10

vers le dispositif d'alimentation du ruban. En raison de la réduction des risques de bourrage assurée par le dispositif de la présente invention, il n'est pas nécessaire que la cartouche comporte une chambre secondaire importante dans laquelle toute boucle supplémentaire pourrait être tirée, ce qui permet d'accroître la taille de la chambre d'emmagasinage de la cartouche sans accroître les dimensions hors tout de ladite cartouche.

Bien que l'on ait décrit dans ce qui précède et représenté sur les dessins les caractéristiques essentielles de l'invention appliquées à un mode de réalisation préféré de celle-ci, il est évident que l'homme de l'art peut y apporter toutes modifications de forme ou de détail qu'il juge utiles, sans pour autant sortir du cadre de ladite invention.

11

REVENDICATIONS -

1. Dispositif pour éviter le bourrage d'un ruban tiré hors de la chambre d'emmagasinage d'une cartouche, dans laquelle il est emmagasiné en boucles de longueurs aléatoires et sans aucun ordre défini, ladite chambre étant délimitée dans la cartouche par une paroi latérale, ledit dispositif étant caractérisé en ce qu'il comporte une fente de forme générale incurvée ménagée dans ladite paroi latérale et dans laquelle passe le ruban tiré hors de ladite chambre, l'incurvation résultante du ruban provoquant le repoussement des boucles adjacentes à ladite fente et évitant ainsi un bourrage.

2. Dispositif selon la revendication 1, caractérisé en ce que ladite fente est en forme d'arc de cercle.

3. Dispositif selon la revendication 1, caractérisé en ce que ladite fente est curvilinéaire.

4. Dispositif selon l'une quelconque des revendications 1 à 3 caractérisé en ce que ladite fente est définie au moyen de deux éléments faisant partie de ladite paroi latérale et rappelés en contact l'un avec l'autre de façon à maintenir constantes la largeur et la forme de la fente.

FIG. 1

FIG. 2

FIG. 3

FIG. 4

FIG. 5

FIG. 6

0012883

Numero de la demande

**RAPPORT DE RECHERCHE EUROPEENNE**

Office européen
des brevets

EP 79 10 4879

| DOCUMENTS CONSIDERES COMME PERTINENTS | | | CLASSEMENT DE LA DEMANDE (Int. Cl ³) |
|---|---|---|---|
| Catégorie | Citation du document avec indication, en cas de besoin, des parties pertinentes | Revendication concernee | |
| X | FR - A - 1 218 146 (EPSYLON RESEARCH AND DEVELOPMENT) <br><br> * Page 2, colonne de droite, lignes 19-31; figures 1,4 * <br><br> ---- | 1,2,3 | B 41 J 32/02 <br> G 11 B 23/12 |

**DOMAINES TECHNIQUES RECHERCHES (Int. Cl.** ³**)**

B 41 T
B 65 H
G 11 B

**CATEGORIE DES DOCUMENTS CITES**

X: particulièrement pertinent

A: arrière-plan technologique

O: divulgation non-ecrite

P: document intercalaire

T: théorie ou principe a la base de l'invention

E: demande faisant interference

D: document cite dans la demande

L: document cite pour d'autres raisons

&: membre de la même famille document correspondant

Le present rapport de recherche a ete etabli pour toutes les revendications

| Lieu de la recherche | Date d'achevement de la recherche | Examinateur |
|---|---|---|
| La Haye | 25-03-1980 | VAN DEN MEERSCHAUT |

OEB Form 1503.1  06.78